# EUROPÄISCHE PATENTSCHRIFT

(11) **EP 1 028 202 B1**
(45) Veröffentlichungstag und Bekanntmachung des Hinweises auf die Patenterteilung: **31.03.2004**
(21) Anmeldenummer: 00101214.5
(22) Anmeldetag: 21.01.2000
(51) Int. Cl.: E04B 1/94, E04B 1/88, B32B 33/00, B32B 5/26, D03D 15/12, D02G 3/44, D04H 1/42, E04C 2/284

(54) **Schall- und Wärmedämmittel**
Heat and sound insulation element
Isolation thermique et acoustique

(30) Priorität: 09.02.1999 DE 19905226
(43) Veröffentlichungstag der Anmeldung: 16.08.2000
(73) Patentinhaber: Möller Plast GmbH, 33649 Bielefeld (DE)
(72) Erfinder: Beckmann, Friedhelm, Dipl.-Ing., 32120 Hiddenhausen (DE)
(74) Vertreter: Schirmer, Siegfried, Dipl.-Ing.

(56) Entgegenhaltungen:
- EP-A- 0 285 338
- EP-A- 0 425 075
- EP-A- 0 942 107
- CH-A- 590 798
- DATABASE WPI Section Ch, Week 199334 Derwent Publications Ltd., London, GB; Class A21, AN 1993-269689 XP002137006 & JP 05 186254 A (GUNEI KAGAKU KOGYO KK), 27. Juli 1993 (1993-07-27)

## Beschreibung

Die Erfindung bezieht sich auf ein Schall- und Wärmedämmittel zur Isolierung von Gebäuden, Fahrzeugen, Leitungen und dergleichen, bestehend aus Fasern als Kernschicht, die mit einem feuerhemmenden Zusatz versehen sind, wobei unterschiedlichen Außenfläche der Kernschicht mit zwei unterschiedlichen nicht oder schwer entzündbaren, bei erhöhten mindestens eine Temperaturen aufschäumenden reaktivierbaren Materialen beschichtet sind.

Wärme- und Schalldämmstoffe dienen der Verminderung der Förtleitung von Wärme und Schall in Gebäuden, Fahrzeugen, Leitungen und Apparaturen. Als Dämmaterial werden unter anderem auch Stoffe aus natürlichen und/oder synthetischen Fasern eingesetzt, die sich bei Hitzeeinwirkung entzünden und dabei toxische Gase erzeugen können. Sie können somit eine erhebliche Gefahr für den Menschen und seine Umwelt darstellen. An die eingesetzten Werkstoffe werden somit nicht nur hohe Anforderungen hinsichtlich der wärme- und schallisolierenden Wirkungen gestellt, sondern darüber hinaus bestehen bei der Anwendung von Dämmstoffen auch strenge Bestimmungen hinsichtlich des Brandschutzes. Durch Beimengung von feuerhemmenden Stoffen, bspw. Borax, Halogene oder phosphorhaltige Verbindungen, wird die Entzündungstemperatur deutlich herabgesetzt. Außerdem kommt es bei der Hitzeeinwirkung auf die verwendeten Stoffe darauf an, daß keine toxischen Gase freigesetzt werden. Zu diesem Zweck werden die Fasern bei der Herstellung von Fasermatten und dgl. mit nichttoxischen Bindemitteln gebunden, und zur weiteren Verminderung des Ausstoßes toxischer Gase sind zusätzliche Beimengen erforderlich.

Bei diesen Maßnahmen, die entsprechend den jeweiligen Anforderungen mit einer aufeinander abgestimmten Beimengung unterschiedlicher flammenhemmender Mittel verbunden sind, geht jedoch ein erheblicher Herstellungsaufwand und eine deutliche Verteuerung der Dämmstoffe einher, um die erforderlichen brandschutztechnischen Eigenschaften zu erreichen. Zudem genügen die zur Minderung der Entflammbarkeit und des Ausstoßes giftiger Gase durchgeführten Maßnahmen nicht den diesbezüglich ständig steigenden Anforderungen an derartige Dämmstoffe.

Aus der EP 0 425 075 A1 ist ein mehrschichtiger feuerhemmender Stoff bekannt, mit einer entflammbaren Unterschicht, einer entflammbaren oberen Schicht und einer dazwischen angeordneten flammhemmenden Gewebeschicht, deren Fasern mit einem sich bei erhöhter Temperatur aufblähenden Stoff beschichtet sind.

Aus der EP 0 285 338 A2 ist eine feuerhemmende Platte aus mehreren Faserschichten bekannt, wobei für ausgewählte Faserschichten Kunststoffasern mit unterschiedlichen Erweichungspunkten und mit inhärenten feuerhemmenden Eigenschaften verwendet werden.

Aus der JP 05186254 A ist ein feuerhemmendes Material aus anorganischen Fasern bekannt, die mit einem bei Wärmeeinwirkung aufschäumbaren Material beschichtet sind.

Die CH 590798 beschreibt eine feuerhemmende Verbundplatte, die zwischen zwei metallischen Außenwänden ein geblähtes anorganisches Material wie z.B. Blähglimmer, eingebettet in einen Kunststoffschaum, enthält.

Aus der nachveröffentlichten EP 0 942 107 A2 ist ein Schaumstoffkörper bekannt, der flammhemmend imprägniert ist und eine Verbundfolie aus zwei Selbstklebefolien trägt, zwischen denen ein bei erhöhter Temperatur blähfähiges Material, vorzugsweise Blähgraphit, eingeschlossen ist.

Der Erfindung liegt die Aufgabe zugrunde, ein Schall- und Wärmedämmittel anzugeben, dessen Entflammbarkeit gegenüber herkömmlichen Dämmstoffen bei verringertem Kostenaufwand deutlich reduziert ist.

Diese Aufgabe wird erfindungsgemäß durch Anspruch 1 gelöst.

Bei einer bestimmten, unter der Entzündungstemperatur liegenden Temperatur wird der reaktive Stoff aufgeschäumt, so daß die als Dämmschicht dienende Kernschicht zum einen gegenüber der hohen Temperatur bei Hitzeeinwirkung isoliert ist und außerdem kein für die Verbrennung erforderlicher Sauerstoff zu dem brennbaren Material der Kernschicht vordringen kann bzw. dort vorhandener Sauerstoff nicht aktiviert werden kann. Die Entzündung der Kernschicht des Dämmstoffes wird verzögert und vollständig verhindert.

Weitere Merkmale oder zweckmäßige Ausgestaltungen der Erfindung ergeben sich aus den Unteransprüchen sowie der nachfolgend beispielhaft wiedergegebenen Ausführungsvariante der Erfindung.

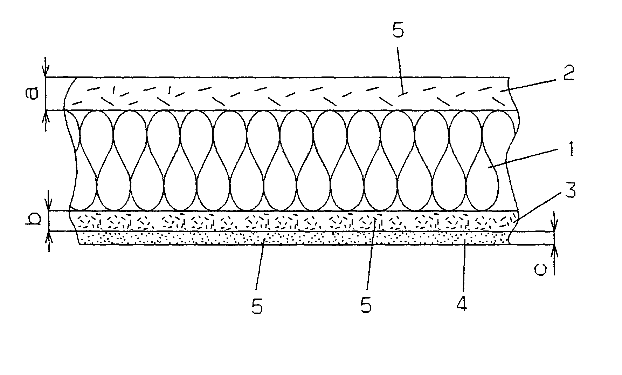

Ein Ausführungsbeispiel der Erfindung wird anhand der Zeichnung näher erläutert. In der einzigen Figur ist ein erfindungsgemäß ausgebildetes Schall- und Wärmedämmelement in einem Teilschnitt dargestellt.

Das Schall- und Wärmedämmittel besteht aus einer Kernschicht oder einem Kemmaterial 1 aus einer - schematisch wiedergegebenen - wellenförmig verlegten Fasermatte, die hier durch ein natürliches Material aus nachwachsenden Rohstoffen und/oder aus mineralischen Fasern und/oder aus synthetischen Fasern gebildet ist. Die Fasermatte ist mit Borax als feuerhemmendem Zusatz getränkt. An den beiden Außenflächen des Kernmaterials 1 ist auf einer Seite eine bei 300°C reaktivierbare Faserschicht 2 mit einer Schichtdicke "a" angeordnet, während sich auf der gegenüberliegenden Außenfläche zwei reaktivierbare Faserschichten 3 und 4 unterschiedliche Dicke "b" und "c", die jeweils bei Temperaturen von 150°C bzw. 300°C aufschäumen, befinden. Die Faserschichten 2 bis 4 bestehen aus einem Gewebe oder Gewirke mit unterschiedlichem Flächengewicht aus schäumbaren Fasern 5. Die schäumbaren Fasern können aber auch aus einem Material bestehen, das selbstverlöschend ist. Wahlweise kann dem Kemmaterial 1 auch ein variierender Anteil an schaumfähigen Fasern beigemengt sein. Anstelle eines Gewebes oder Gewirkes können die Faserschichten 2 bis 4 auch aus aufgestreuten geschnittenen Fasern bestehen. Die schäumbaren Fasern weisen dabei unterschiedliche Reaktionstemperaturen auf. Um aus dem Kernmaterial einen Mattenverbund zu bilden, kann ein- oder beidseitig eine Folie, Pappe oder dergleichen angebracht sein.

Bei einer Wärmeeinwirkung oberhalb 150°C bzw. 300°C wird das reaktive, aufschäumbare Material reaktiviert, d.h., es wird aufgeschäumt, so daß der in den Faserschichten 2 bis 4 bzw. der in den Fasern selbst vorhandene Sauerstoff für einen Verbrennungsvorgang nicht aktiviert werden kann und auch kein Sauerstoff in das Kernmaterial 1, d.h. die Kernschicht, eindringen kann. Da das Kernmaterial 1 durch die bei einer Hitzeeinwirkung aufgeschäumten Faserschichten 2 bis 4 nach außen vollständig isoliert ist, wird dort die Entzüdungstemperatur nicht erreicht, und außerdem steht der in der Kernschicht vorhandene Sauerstoff für eine Verbrennung nicht zur Verfügung.

Es wird somit ein Schall- und Wärmeelement bereitgestellt, das mit seinen äußeren und inneren Faserschichten für gute Dämmeigenschaften sorgt und das schwer oder nicht entzündbar ist und die Erzeugung toxischer Gase im wesentlichen ausschließt.

## Patentansprüche

1. Schall- und Wärmedämmittel zur Isolierung von Gebäuden, Fahrzeugen, Leitungen und dergleichen, bestehend aus Fasern als Kernschicht, die mit einem feuerhemmenden Zusatz versehen sind, wobei Außenflächen der Kernschicht (1) mit einem nicht oder schwer entzündbaren, bei erhöhter Temperatur aufschäumenden reaktivierbaren Material beschichtet sind, **dadurch gekennzeichnet, daß** auf mindestens einer Außenfläche der Kemschicht (1) zwei oder mehrere, bei unterschiedlichen Temperaturen reaktivierbare Material- und/oder Faserschichten (3 bis 4) angeordnet sind.

2. Schall- und Wärmedämmittel nach Anspruch 1, **dadurch gekennzeichnet, daß** auf den Außenflächen einer als Kernschicht (1) dienenden Wärmedämmatte aus natürlichen und/oder mineralischen und/oder synthetischen Fasern eine mit reaktivem, schaumbildendem Material durchsetzte oder oberflächenaktiv beschichtete Folie oder Faserschicht (3 bis 4) ausgebildet ist.

3. Schall- und Wärmedämmaterial nach Anspruch 2, **dadurch gekennzeichnet, daß** die reaktivierbare Faserschicht ein Gewebe oder ein Gewirke ist, dessen Fasern aus reaktivem Material bestehen oder mit dem reaktivierbaren Stoff ummantelt oder besprüht sind.

4. Schall- und Wärmedämmelement nach Anspruch 2, **dadurch gekennzeichnet, daß** die reaktivierbaren Faserschichten (3 bis 4) aus unmittelbar auf die Kernschicht (1) aufgestreuten, aufschäumbaren, geschnittenen Fasern (5) mit bestimmter Länge und bestimmtem Faserdurchmesser bestehen.

5. Schall- und Wärmedämmittel nach einem der Ansprüche 2 bis 4, **dadurch gekennzeichnet, daß** die Fasern der Faserschichten aus synthetischen und/oder natürlichen bzw. nachwachsenden Fasern und/oder aus Kohlefasern und/oder aus Glasfasern bestehen.

6. Schall- und Wärmedämmittel nach einem der Ansprüche 2 bis 5, **dadurch gekennzeichnet, daß** die schäumbaren Fasern aus einem selbstverlöschenden Material bestehen.

7. Schall- und Wärmedämmittel nach einem der Ansprüche 1 bis 6, **dadurch gekennzeichnet, daß** es an den Außenflächen jeweils mit mindestens einer bei unterschiedlich hohen Temperaturen reaktivierbaren Material- und/oder Faserschicht bedeckt ist.

8. Schall- und Wärmedämmittel nach einem der Ansprüche 1 bis 7, **dadurch gekennzeichnet, daß** die auf der (den) Außenfläche(n) ausgebildeten reaktivierbaren Material- und/oder Faserschichten unterschiedliche Schichtdicken aufweisen.

9. Schall- und Wärmedämmittel nach einem der Ansprüche 1 bis 8, **dadurch gekennzeichnet, daß** die überwiegend schall- und wärmedämmend wirkende Kernschicht (1) aus synthetischen und/oder natürlichen bzw. nachwachsenden Fasern und/oder aus Glasfasern/mineralischen Fasern und/oder aus Kohlefasern besteht.

10. Schall- und Wärmedämmittel nach Anspruch 9, **dadurch gekennzeichnet, daß** die Fasern der Kernschicht mit einem reaktiv aufschäumbaren Stoff ummantelt sind oder einen variablen Anteil schäumfähiger Fasern aufweisen.

11. Schall- und Wärmedämmelement nach einem der Ansprüche 1 bis 10, **dadurch gekennzeichnet, daß** auf der Kernschicht (1) zur Herstellung eines Mattenverbundes ein- oder beidseitig eine Folie oder Pappe oder dergleichen angebracht ist.

## Claims

1. Acoustic and thermal insulating means for the insulation of buildings, vehicles, ducts and the like, consisting of fibres as a core layer, which are provided with a fire-retardant additive, wherein external surfaces of the core layer (1) are coated with a non-ignitable or poorly ignitable reactivatable material which foams at elevated temperature, **characterised in that** two or more material layers and/or fibre layers (3 to 4) reactivatable at different temperatures are arranged on at least one external surface of the core layer (1).

2. Acoustic and thermal insulating means according to claim 1, **characterised in that** a film or fibre layer (3 to 4) interspersed with or coated in surface-active manner by reactive foam-forming material is formed on the external surfaces of a thermal insulation mat, which serves as core layer (1), of natural and/or mineral and/or synthetic fibres.

3. Acoustic and thermal insulating material according to claim 2, **characterised in that** the reactivatable fibre layer is a woven fabric or a knitted fabric, the fibres of which consist of reactive material or are encased by or sprayed with the reactivatable substance.

4. Acoustic and thermal insulating element according to claim 2, **characterised in that** the reactivatable fibre layers (3 to 4) consist of foamable cut fibres (5) with specific length and specific fibre diameter scattered directly on the core layer (1).

5. Acoustic and thermal insulating means according to one of claims 2 to 4, **characterised in that** the fibres of the fibre layers consist of synthetic and/or natural or regenerative fibres and/or of carbon fibres and/or of glass fibres.

6. Acoustic and thermal insulating means according to one of claims 2 to 5, **characterised in that** the foamable fibres consist of a self-extinguishing material.

7. Acoustic and thermal insulating means according to one of claims 1 to 6, **characterised in that** it is covered at the external surfaces each time by at least one material layer and/or fibre layer reactivatable at temperatures of different level.

8. Acoustic and thermal insulating means according to one of claims 1 to 7, **characterised in that** the reactivatable material layers and/or fibre layers formed on the external surface or surfaces have different layer thicknesses.

9. Acoustic and thermal insulating means according to one of claims 1 to 8, **characterised in that** the core layer (1) acting predominantly in acoustically and thermally insulating manner consists of synthetic and/or natural or regenerative fibres and/or of glass fibres or mineral fibres and/or of carbon fibres.

10. Acoustic and thermal insulating means according to claim 9, **characterised in that** the fibres of the core layer are encased by a reactive foamable substance or have a variable proportion of fibres capable of foaming.

11. Acoustic and thermal insulating element according to one of claims 1 to 10, **characterised in that** a film or cardboard or the like is mounted at one side or at both sides on the core layer (1) for producing a mat composite.

## Revendications

1. Agent d'isolation acoustique et thermique pour l'isolation de bâtiments, de véhicules, de canalisations et autres, constitué de fibres en tant que couche centrale, qui sont dotées d'un additif coupe-feu, les faces extérieures de la couche centrale (1) étant recouvertes d'une matière non inflammable ou difficilement inflammable, réactivable et moussable à haute température,
**caractérisé en ce que**
sur au moins une face extérieure de la couche centrale (1), sont disposées deux ou plusieurs couches de matière et/ou de fibres (3 à 4) réactivables à différentes températures.

2. Agent d'isolation acoustique et thermique selon revendication 1,
**caractérisé en ce que**
sur les face extérieures d'un matelas d'isolation thermique en fibres naturelles et/ou minérales et/ou synthétiques, servant de couche centrale (1), est formé(e) un film ou une couche de fibres (3 à 4) chargé(e) d'une matière réactive moussante ou portant un revêtement tensioactif.

3. Agent d'isolation acoustique et thermique selon revendication 2,
**caractérisé en ce que**
la couche de fibres réactivable est un tissu ou une matière à mailles, dont les fibres sont constituées d'une matière réactive ou sont enveloppées ou aspergées d'une substance réactivable.

4. Agent d'isolation acoustique et thermique selon revendication 2,
**caractérisé en ce que**
les couches de fibres réactivables (3 à 4) sont constituées de fibres (5) coupées, moussables et directement répandues sur la couche centrale (1), d'une certaine longueur et d'un certain diamètre de fibres.

5. Agent d'isolation acoustique et thermique selon l'une quelconque des revendications 2 à 4,
**caractérisé en ce que**
les fibres des couches de fibres sont constituées de fibres synthétiques et/ou naturelles respectivement renouvelables et/ou de fibres de carbone et/ou de fibres de verre.

6. Agent d'isolation acoustique et thermique selon l'une quelconque des revendications 2 à 5,
**caractérisé en ce que**
les fibres moussables sont constituées d'une matière auto-extinctrice.

7. Agent d'isolation acoustique et thermique selon l'une quelconque des revendications 1 à 6,
**caractérisé en ce qu'**
il est recouvert, sur chacune des faces extérieures, d'au moins une couche de matière et/ou de fibres réactivable à différentes températures élevées.

8. Agent d'isolation acoustique et thermique selon l'une quelconque des revendications 1 à 7,
**caractérisé en ce que**
les couches de matière et/ou de fibres réactivables formées sur la (les) face(s) extérieure(s) présentent des épaisseurs différentes.

9. Agent d'isolation acoustique et thermique selon l'une quelconque des revendications 1 à 8,
**caractérisé en ce que**
la couche centrale (1), à action essentiellement acoustiquement et thermiquement isolante est constituée de fibres synthétiques et/ou naturelles respectivement renouvelables et/ou de fibres de verres/fibres minérales et/ou de fibres de carbone.

10. Agent d'isolation acoustique et thermique selon revendication 9,
**caractérisé en ce que**
les fibres de la couche centrale sont enveloppées d'une substance réactive moussable ou présentent une fraction variable de fibres moussables.

11. Agent d'isolation acoustique et thermique selon l'une quelconque des revendications 1 à 10,
**caractérisé en ce qu'**
est placé, sur la couche centrale (1), d'un côté ou des deux, un film ou du carton ou autres pour fabriquer un matelas composite.
